# EUROPÄISCHE PATENTANMELDUNG

(11) **EP 2 599 708 A1**
(43) Veröffentlichungstag der Anmeldung: **05.06.2013**
(21) Anmeldenummer: 12195154.5
(22) Anmeldetag: 30.11.2012
(51) Int. Cl.: B63B 29/06

(54) **Möbelkonzept für Wasserfahrzeuge**

(30) Priorität: 02.12.2011 DE 102011087671
(71) Anmelder: Bavaria Yachtbau GmbH, 97232 Giebelstadt (DE)
(72) Erfinder: Ludmann, Jens, 51766 Engelskirchen (DE); Mitnacht, Walter, 97285 Röttingen (DE)
(74) Vertreter: Schmitz, Alexander

(57) **Zusammenfassung**

Möbelkonzept für ein Personentransportfahrzeug, Wasserfahrzeug bzw. Boot, bei dem eine Möbeleinheit (12) mit zwei Möbelfüßen (10, 20) mit jeweils einer Drehachse (11, 21), um sich die Möbeleinheit bei einem Verfahren entlang einer Führungsschiene mit verschiedenen Krümmungsradien drehen kann.

## Beschreibung

### Gebiet der Erfindung.

Die vorliegende Erfindung betrifft ein Möbelkonzept, insbesondere ein Möbelkonzept für bewegbare Möbel für Personentransportfahrzeuge, insbesondere für Wasserfahrzeuge, sowie ein Möbelmodul und ein Wasserfahrzeug mit einem entsprechenden Möbelmodul.

### Hintergrund der Erfindung

Personentransportfahrzeuge bewegen sich in der Regel mit einer gewissen Reisegeschwindigkeit über die entsprechenden Transportwege. Dieses trifft auch für Wasserfahrzeuge zu, die sich mit einer gewissen Geschwindigkeit über das Wasser bewegen. Dabei unterliegt die Bewegung neben dem stationären Bewegungszustand einer Fortbewegung auch einer Beschleunigung und Abbremsung. Eine Beschleunigung tritt insbesondere bei einem Start des Wasserfahrzeugs und bei einer Kurvenfahrt des Wasserfahrzeugs auf. Aufgrund der bei einer Beschleunigung bzw. bei einem Abbremsen auftretenden Kräfte müssen Einrichtungsgegenstände, insbesondere Möbel in bzw. auf einem Personentransportfahrzeug wie einem Wasserfahrzeug, befestigt werden. Die Befestigung muss so erfolgen, dass nicht nur die Beschleunigungs- bzw. Gewichtskräfte des entsprechenden Möbelstückes durch die Befestigung aufgenommen werden können, sondern ebenfalls die durch Personen auf die Möbelstücke wirkenden Kräfte aufgenommen werden. Insbesondere müssen Möbelstücke bezüglich ihrer Befestigung auch Kräfte aufnehmen, die beispielsweise verursacht sind durch aus dem Gleichgewicht geratene Personen, die sich beispielsweise auf dem Möbel versuchen abzustützen. Eine besondere Schwierigkeit besteht dabei bei Möbeln, die nicht ortsfest auf dem Personentransportfahrzeug bzw. dem Wasserfahrzeug befestigt sind, sondern als bewegliche Möbeleinheiten ausgestaltet sind. In diesem Fall muss die Festlegung der Möbeleinheiten im bzw. auf dem Personentransportfahrzeug bzw. dem Wasserfahrzeug zum einen so erfolgen, dass die entsprechenden Kräfte aufgenommen werden können, jedoch auch in einer Art und Weise, dass die betreffende Möbeleinheit ohne große Schwierigkeiten verstellt werden kann, insbesondere bezüglich ihres Standortes. Zu diesem Zweck sind im Stand der Technik Schienensysteme vorgeschlagen, bei denen Möbeleinheiten beispielsweise entlang einer geraden Trajektorie bewegt werden können, um den entsprechenden Stellplatz des Möbels zu verändern. Ferner sind im Stand der Technik Lösungen vorgeschlagen, die kreissegmentförmige Schienen vorschlagen, entlang derer die auf den entsprechenden Schienen angeordneten Möbeleinheiten entlang der Kreissegmentbahn bewegt werden können.

Es besteht jedoch bei den im Stand der Technik vorgeschlagenen Lösungen regelmäßig das Problem, dass die Bewegungsräume der zu verschiebenden Möbeleinheiten sehr eingeschränkt sind, sodass die Möbel in dem Personentransportfahrzeug bzw. dem Wasserfahrzeug nur sehr eingeschränkt repositioniert werden können und somit keine große Variabilität bezüglich der Nutzung aufweisen.

### Zusammenfassung der Erfindung

Vor diesem Hintergrund kann es als eine Aufgabe der vorliegenden Erfindung betrachtet werden, ein Möbelkonzept für Personentransportfahrzeug insbesondere Wasserfahrzeug bereitzustellen, die eine gegenüber dem Stand der Technik erhöhte Flexibilität der Möbelposition aufweisen.

Diese Aufgabe wird gelöst durch eine schienengebundene Möbeleinheit für ein Personentransportfahrzeug bzw. ein Wasserfahrzeug, ein Möbelmodul für ein Personentransportfahrzeug bzw. ein Wasserfahrzeug, sowie ein Wasserfahrzeug mit einem entsprechenden Möbelmodul gemäß der unabhängigen Ansprüche, wobei beispielhafte Ausführungsformen in den abhängigen Ansprüchen verkörpert sind.

Gemäß einer beispielhaften Ausführungsform der Erfindung wird eine schienengebundene Möbeleinheit für ein Personentransportfahrzeug bzw. ein Wasserfahrzeug bereitgestellt, wobei die Möbeleinheit an einer am Personentransportfahrzeug bzw. Wasserfahrzeug vorzusehenden Führungsschiene mit unterschiedlichen Krümmungsradien befestigbar ist, wobei die Möbeleinheit einen ersten schienenläufigen Möbelfuß und einen zweiten schienenläufigen Möbelfuß zur Befestigung der schienengebundenen Möbeleinheit an der vorzusehenden Führungsschiene aufweist, wobei der zweite schienenläufigen Möbelfuß von dem ersten schienenläufigen Möbelfuß beabstandet ist, wobei der erste und der zweite schienenläufige Möbelfuß jeweils eine Drehachse aufweisen, um die sich die Möbeleinheit bei einem Verschieben entlang der Führungsschiene bezüglich der Führungsschiene derart drehen kann, dass die schienengebundene Möbeleinheit über die schienenläufigen Möbelfüße in einer Führungsschiene mit unterschiedlichen Krümmungsradien verfahrbar ist.

Durch das Vorsehen von zwei Möbelfüßen an einer Möbeleinheit ist es möglich, die Möbeleinheit über eine Führungsschiene zu bewegen, auch wenn die Führungsschiene über ihren Verlauf unterschiedliche Krümmungsradien aufweist. Insbesondere wenn die Führungsschiene beispielsweise gerade Abschnitte und gekrümmte Abschnitte aufweist, ist es mit den zwei beabstandeten Möbelfüßen möglich, dass das Möbelstück auch um eine Kurve bzw. Ecke verschoben werden kann, da sich das Möbelstück bzw. die Möbeleinheit aufgrund der an den Möbelfüßen vorgesehenen Drehachsen bezüglich der Schiene drehen kann. Dabei sei verstanden, dass die Drehung dabei keine ortsfeste Drehung sein muss, sondern eine kombinierte Dreh-Schiebe-Bewegung sein kann. Insbesondere wenn die Möbeleinheit von einem geraden Schienenstück um eine Kurve verschoben wird, kann sich die Möbeleinheit dabei jeweils um die Drehachsen an den Drehfüßen drehen, um der Trajektorie der Führungsschiene auch dann zu folgen, wenn diese unterschiedliche Krümmungsradien aufweist, etwa gerade Abschnitte und gekrümmte bzw. Kurvenabschnitte. Es sei verstanden, dass auch ein Übergang von weiteren auf engere Kurven und umgekehrt durchfahren werden kann. Insbesondere ist es möglich, eine im Wesentlichen frei wählbare Schienengeometrie vorzusehen, die es etwa ermöglicht, Sitzmöbel wahlweise nebeneinander oder gegenüber zu positionieren, ohne dabei auf eine starre durchgehend kreissegmentförmige oder gerade Schienenführung festgelegt zu sein.

Gemäß einer weiteren beispielhaften Ausführungsform weist die schienengebundene Möbeleinheit eine Unterseite auf, wobei wenigstens einer der schienenläufigen Möbelfüße eine über die Unterseite hinausragende Führungsvorrichtung zum Führen des Möbelfußes in einem Laufschlitz der vorzusehenden Führungsschiene aufweist, wobei die Führungsvorrichtung einen beweglichen Teil aufweist, der eine Bewegungsrichtungskomponente aufweist, die orthogonal zur Unterseite verläuft, wobei der bewegliche Teil eine Auskragung parallel zur Unterseite derart aufweist, dass die Auskragung hinter eine Hinterschneidung der vorzusehenden Führungsschiene greift, wobei der bewegliche Teil derart mit einer Kraft beaufschlagbar ist, dass er gegen die Hinterschneidung der vorzusehenden Führungsschiene drückt und die beaufschlagte Kraft auf eine Standfläche wirkt.

Die Standfläche der Möbeleinheit kann dabei als die Fläche betrachtet werden, auf der die Möbeleinheit mit gegebenenfalls vorgesehenen Füßen, Rollen, Kufen oder Gleitern steht, insbesondere eine Deckoberfläche. Dabei sei angemerkt, dass die eigentlichen Berührungspunkte von etwaigen Rollen, Kufen, Gleitern oder Füßen der Möbeleinheit auch tiefer liegen können als die Oberkante der Führungsschiene, wenn diese etwa höher als die Deckoberfläche verläuft. In diesem Fall muss die Führungsvorrichtung nicht zwingend weiter von der Möbeleinheit abstehen als die Berührungsfläche der Standfüße, Kufen, Gleiter order Rollen auf der Deckoberfläche. Im Regelfall wird man jedoch bestrebt sein, die Schiene nicht über die eigentliche Deckoberfläche hinausstehen zu lassen, um insbesondere bei Wasserfahrzeugen keine Stolperstellen zu erzeugen. Die am jeweiligen Möbelfuß vorgesehene Führungsvorrichtung ragt derart über die Standfläche bzw. Unterseite der Möbeleinheit hinaus, dass sie in einen Laufschlitz der vorzusehenden Führungsschiene einragen kann, um eine Führung innerhalb der Führungsschiene zu ermöglichen. Der bewegliche Teil der Führungsvorrichtung kann durch eine derartige Konstruktion etwa abgesenkt werden, sodass er mit seiner Auskragung nicht auf die Hinterschneidungsfläche der Führungsschiene drückt und somit leicht ein Verschieben der Möbeleinheit möglich ist, insbesondere wenn Rollen oder Gleitkufen an der Möbeleinheit vorgesehen sind. Soll jedoch die Möbeleinheit bezüglich der Führungsschiene festgelegt werden, so kann der bewegliche Teil mit der Auskragung so bewegt und mit einer Kraft beaufschlagt werden, dass die Auskragung auf eine entsprechende Hinterschneidungsfläche der Führungsschiene drückt. Somit kann eine Kraft ausgeübt werden, die als Gegenkraft über den Möbelfuß und die Möbeleinheit beispielsweise auf einen Standfuß, eine Standrolle oder eine Gleitkufe drückt, so dass diese durch die erhöhte Haftreibung auf der Standfläche gegen ein Verrutschen festgelegt werden. Somit kann über den beweglichen Teil des Möbelfußes die Möbeleinheit auf der Standfläche festgezogen werden, um die Möbeleinheit temporär ortsfest zu positionieren. Es kann auch nur der erste Möbelfuß mit einem beweglichen Teil mit Auskragung ausgestaltet sein, wobei der zweite Möbelfuß lediglich als Führungsfuß ausgestaltet sein kann. In diesem Fall erfolgt die Festlegung über lediglich einen der beiden Möbelfüße, nämlich den ersten Möbelfuß. Der zweite Möbelfuß kann dabei lediglich als Führung ohne Auskragung ausgestaltet sein, sodass dieser Fuß ohne weiteres an jeder Stelle der Schiene nach oben entnommen werden kann. Der zweite Möbelfuß kann jedoch auch eine Auskragung an einem nicht beweglichen Teil aufweisen, sodass zwar über den zweiten Möbelfuß keine Festlegung entlang der Bewegungsrichtung erfolgt, der zweite Möbelfuß jedoch nicht versehentlich aus der Schiene gezogen werden kann. Funktional entspricht dies einem nicht festgelegten Zustand des beweglichen Teils des ersten Möbelfußes. Es sei angemerkt, dass die Bewegungsrichtung des beweglichen Teils nicht rein orthogonal zur Unterseite bzw. Standfläche erfolgen muss, sonder auch schräg verlaufen kann.

Gemäß einer beispielhaften Ausführungsform der Erfindung weist die Auskragung eine von der Auskragung rückwärtig in Richtung der Möbeleinheit vorspringende Andruckfläche auf.

Auf diese Weise kann an der hinter die Hinterschneidung greifenden Auskragung ein weiterer Vorsprung bereitgestellt werden, der als definierte Andruckfläche zum Andruck auf die Hinterschneidungsfläche der Führungsschiene dient. Diese Andruckfläche kann beispielsweise bezüglich ihrer Oberfläche so beschaffen sein, dass die Haftreibung erhöht wird, um entsprechende Querkräfte geeignet aufnehmen zu können. Die Andruckfläche kann dabei durch das Vorspringen hinter eine Wandung an der Führungsschlitzkante greifen, um so zuverlässig an die Hinterschneidungsfläche drückbar zu sein.

Gemäß einer beispielhaften Ausführungsform der Erfindung weist die Führungsvorrichtung eine um eine Bewegungsachse des beweglichen Teils angeordnete drehbare Laufbuchse auf, zur Anlage an einer Lauffläche der vorzusehenden Führungsschiene.

Auf diese Weise kann der Teil des Möbelfußes, der in den Laufschlitz der Führungsschiene einragt, mit einer drehbaren Laufbuchse versehen werden, die es ermöglicht, dass diese Laufbuchse bei einer Verschiebungsbewegung entlang der Führungsschiene auf einer entsprechenden Anlagefläche der Führungsschiene abrollt. Auf diese Weise kann beispielsweise ein Ausschlagen bzw. Beschädigen der Führungsschiene vermieden oder reduziert bzw. die entsprechenden Kräfte vermindert werden, die zu einem Verschieben der Möbeleinheit notwendig sind. Es sei verstanden, dass sich die drehbare Laufbuchse dabei sowohl an dem beweglichen Teil befinden kann, als auch an einem unbeweglichen Teil des Möbelfußes. Mit anderen Worten kann bei einer Bewegung des beweglichen Teils die Laufbuchse entweder ortsfest bezüglich des Möbelfußes verbleiben oder ortsfest bezüglich des beweglichen Teils, sich somit mit dem beweglichen Teil auf und ab bewegen. Es sei verstanden, dass die Laufbuchse auch neben dem beweglichen Teil angeordnet sein kann, sodass die Laufbuchse leichter ausgetauscht werden kann. Es können auch zwei Laufbuchsen jeweils vor und hinter dem beweglichen Teil angeordnet sein.

Gemäß einer beispielhaften Ausführungsform der Erfindung weist wenigstens ein Teil des beweglichen Teils der Führungsvorrichtung die Form einer rotationssymmetrischen Welle auf, wobei die Laufbuchse drehbar um die Welle angeordnet ist.

Auf diese Weise kann eine definierte Lagerfläche für die Laufbuchse bereitgestellt werden.

Gemäß einer beispielhaften Ausführungsform der Erfindung weist der schienenläufige Möbelfuß einen Drehteller auf, wobei die Führungsvorrichtung zwei von dem Drehteller über eine Standfläche bzw. Unterseite der Möbeleinheit auskragende Führungsstifte aufweist, wobei der Drehteller bezüglich der schienengebundenen Möbeleinheit um die Drehachse drehbar gelagert ist, wobei die Führungsstifte in einen Laufschlitz der vorzusehenden Führungsschiene eingreifen, wobei sich die Auskragung von den Führungsstiften derart erstreckt, dass die Auskragung hinter die Hinterschneidung der vorzusehenden Führungsschiene greift.

Auf diese Weise kann über den Drehteller eine Art Fahrgestell bereitgestellt werden, sodass es möglich ist, die Möbeleinheit über zwei Drehachsen an den beiden schienenläufigen Möbelfüßen bezüglich der Schiene zu drehen, jedoch insgesamt vier Führungsstifte bereitzustellen, was die Belastung der einzelnen Führungsstifte reduziert. Zudem kann die Laufruhe der Führungsvorrichtung verbessert werden.

Prinzipiell ist diese Anordnung funktional ähnlich aufgebaut wie zweiachsige Drehgestelle an einem Eisenbahnwaggon, die bei einem Eisenbahnwaggon die Führung über vier Achsen erlauben, wobei bezüglich des Waggonaufbaus nur zwei Drehachsen vorgesehen sind, die eine beliebige Kurvengängigkeit aufweisen. Die Auskragung kann dabei so ausgestaltet sein, dass sie die beiden Führungsstifte an einem Möbelfuß verbindet. Jedoch kann auch jeder Stift eine eigene Auskragung aufweisen. Ferner kann die Auskragung auch an einem beweglichen Teil vorgesehen sein, der jedoch nicht mit den beiden Führungsstiften verbunden ist. So kann etwa mittig des Drehtellers ein bezüglich des Möbelfußes drehfester beweglicher Teil mit der Auskragung vorgesehen sein, wobei sich der Drehteller mit den beiden Führungsstiften um den beweglichen Teil drehen kann. So können die Führungsstifte bezüglich der Führung, d.h. Aufnahme von Seitenkräften ausgelegt werden, während der bewegliche Teil bezüglich der Festlegung, d.h. Aufnahme von Zugkräften ausgelegt werden kann.

Gemäß einer beispielhaften Ausführungsform der Erfindung ist der bewegliche Teil des ersten und des zweiten schienenläufigen Möbelfußes über einen Hebel gleichzeitig bewegbar und mit einer Andruckkraft beaufschlagbar.

Auf diese Weise kann mittels eines einzelnen Hebels eine Kraft gleichzeitig auf beide beweglichen Teile von beiden Möbelfüßen ausgeübt werden, sodass mit einer einzigen Handbewegung die Festlegung von beiden schienenläufigen Möbelfüßen in der Führungsschiene erfolgen kann. Die Andruckkraft kann unmittelbar durch den Hebel erfolgen. Alternativ kann die Andruckkraft auch über eine Feder erzeugt werden, wobei dann mittels des Hebels eine de Feder entgegengesetzte Kraft aufgebracht werden kann, um die Federandruckkraft aufzuheben.

Es sei angemerkt, dass selbstverständlich auch für jeden Möbelfuß einzeln ein separater Hebel vorgesehen werden kann, insbesondere wenn die Andruckkräfte erhöht werden sollen und dies einen separaten Hebel für jeden Möbelfuß erfordert.

Selbstverständlich kann auch nur einer der beiden Möbelfüße mit einer derartigen Festlegungsvorrichtung versehen sein, und der andere Möbelfuß frei in der Schiene beweglich bleiben. Dies setzt jedoch voraus, dass der vorgesehene bewegliche Teil in der Lage ist alleine das gesamt Möbelstück bzw. die Möbeleinheit zuverlässig in der Führungsschiene festzulegen.

Gemäß einer beispielhaften Ausführungsform der Erfindung ist der bewegliche Teil mit einer Federanordnung derart vorgespannt, dass die Auskragung in einer ersten, die Möbeleinheit an der Führungsschiene festlegenden Position gegenüber der Hinterschneidung der vorzusehenden Führungsschiene mit einer Kraft beaufschlagt ist, und in einer zweiten, die Möbeleinheit von der Führungsschiene freigebenden Position durch den Hebelanordnung eine der Kraft entgegengesetzte Gegenkraft auf den beweglichen Teil wirkt, der die Auskragung von der Hinterschneidung beabstandet hält.

Auf diese Weise kann ermöglicht werden, dass in einem Versagensfall der Hebelanordnung immer eine Festlegung der Möbeleinheit erfolgt und somit ein unbeabsichtigtes Lösen vermieden werden kann. Die Federanordnung kann auch Unebenheiten und variierende Schienen- oder Deckauflagedicken kompensieren. Die Feder stellt damit nicht nur ein festlegendes Element dar, sondern auch ein Ausgleichselement. Das Zusammendrücken der Federn, bzw. das Abheben der Auskragung kann durch eine Hubbewegung ausgeführt werden, welche durch z.B. einen Spiralexzenter mit Totpunkt aus der Drehbewegung erzeugt wird.

Gemäß einer beispielhaften Ausführungsform der Erfindung weist der wenigstens eine schienenläufige Möbelfuß eine Exzentervorrichtung aufweist, wobei der bewegliche Teil des wenigstens einen schienenläufigen Möbelfußes mittels der Exzentervorrichtung zwischen einer ersten, die Möbeleinheit an der Führungsschiene festlegenden Position und einer zweiten, die Möbeleinheit von der Führungsschiene freigebenden Position bewegbar ist.

Auf diese Weise kann eine definierte Wegkennlinie erzeugt werden, je nach dem, wie der Exzenter ausgestaltet ist. Dazu kann ein Spiralexzenter mit Totpunkt verwendet werden, bei dem ein Verfahrweg aus einer Drehbewegung erzeugt werden kann. Ein Exzenter kann dabei auch eine kleiner Bauform aufweisen und weniger gelenkige Teile aufweisen im Vergleich zu einem Gelenkarmmechanismus.

Gemäß einer beispielhaften Ausführungsform der Erfindung weist die schienengebundene Möbeleinheit ferner eine einer der vorzusehenden Führungsschiene zugewandten Anlagefläche und eine Gleit- bzw. Rollauflage auf, wobei die Gleit- bzw. Rollauflage in Richtung der vorzusehenden Führungsschiene federnd gelagert ist, wobei die federnd gelagerte Gleit- bzw. Rollauflage in einer zweiten, die Möbeleinheit von der Führungsschiene freigebenden Position die Anlagefläche von einer der Anlagefläche gegenüberliegenden Bootsfläche beabstandet hält.

Auf diese Weise kann die Möbeleinheit in einem unbelasteten oder gering belasteten Zustand über die Gleit- bzw. Rollauflage auf dem Bootsdeck entlang der Schiene bewegt werden. Im Falle einer Gewichtsbelastung oder Kraftbeaufschlagung gibt die Federung nach und die Möbeleinheit ruht auf der Anlagefläche. Bei einer Festlegung wirkt eine Kraft von der Auflagefläche auf z.B. das Bootsdeck und von der Auskragung auf die Hinterschneidung, sodass die Möbeleinheit dadurch festgeklemmt wird. Es sein angemerkt, dass die federnd gelagerte Gleit- bzw. Rollauflage bezüglich der Federkraft so bemessen sein kann, dass nur die unbelastete Möbeleinheit angehoben ist, jedoch die durch eine Benutzung belastete Möbeleinheit und bei einer Festlegung des Möbelfußes die Möbeleinheit auf der Anlagefläche ruht. Jedoch kann die federnd gelagerte Gleit- bzw. Rollauflage bezüglich der Federkraft auch so bemessen sein, dass auch die belastete Möbeleinheit, z.B. besetztes Sofa angehoben ist, und nur bei einer Festlegung des Möbelfußes die Möbeleinheit auf der Anlagefläche ruht. Es können jedoch auch alle drei oben beschriebenen Zustände vorgesehen sein, zwischen denen der Benutzer wählen kann, d.h. eine durch den Benutzer wählbare Einstellung, dass eine benutzte Möbeleinheit entweder mobil bleibt, d.h. angehoben ist und auf der Gleit- bzw. Rollauflage ruht, oder fest ist, d.h. auf den Anlagefläche ruht. Das kann durch entsprechende Rastungen und Zwischenrastungen auf der Exzentervorrichtung arretiert werden.

Gemäß einer beispielhaften Ausführungsform der Erfindung weist der wenigstens eine schienenläufige Möbelfuß einen zweiten beweglichen Teil auf, wobei der zweite bewegliche Teil eine der vorzusehenden Führungsschiene zugewandte Anlagefläche aufweist, wobei der erste bewegliche Teil gegenüber dem zweiten beweglichen Teil mittels der Exzentervorrichtung derart zwischen der ersten und der zweiten Position bewegbar ist, dass in der ersten Position die Auskragung gegenüber der Anlagefläche derart mit einer Kraft beaufschlagbar ist, dass der wenigstens eine schienengebundene Möbelfuß gegenüber der vorzusehenden Führungsschiene festlegbar ist, und in der zweiten Position der wenigstens eine schienengebundene Möbelfuß gegenüber der vorzusehenden Führungsschiene bewegbar ist.

Gemäß einer beispielhaften Ausführungsform der Erfindung drückt in der ersten Position die Auskragung gegen die Hinterschneidung der vorzusehenden Führungsschiene und die Anlagefläche gegen eine Gegenseite der Hinterschneidung der vorzusehenden Führungsschiene.

Auf diese Weise sind keine federnd gelagerte Gleit- bzw. Rollauflagen notwendig, können jedoch vorgesehen sein. Eine Festlegung erfolgt durch eine Kraft von der Auflagefläche an dem zweiten beweglichen Teil auf z.B. das Bootsdeck und von der Auskragung auf die Hinterschneidung, sodass die Möbeleinheit dadurch festgeklemmt wird.

Gemäß einer beispielhaften Ausführungsform der Erfindung ist die Exzentervorrichtung auf einer gegenüber der schienengebundenen Möbeleinheit drehbar gelagerten Achse angeordnet ist und eine gegenüber der drehbar gelagerten Achse erste Exzenterscheibe mit einer ersten Exzenterrichtung und eine gegenüber der drehbar gelagerten Achse zweite Exzenterscheibe mit einer zweiten Exzenterrichtung aufweist, wobei der bewegliche Teil mit der ersten Exzenterscheibe und der zweite bewegliche Teil mit der zweiten Exzenterscheibe derart gekoppelt ist, dass bei einer Drehung der Exzentervorrichtung der bewegliche Teil gegenüber dem zweiten beweglichen Teil zwischen der ersten Position und der zweiten Position bewegbar ist.

Auf diese Weise kann eine Vergrößerung des Abstandes der beiden beweglichen Teile erreicht werden bzw. beide beweglichen Teile einer definierten Bewegungscharakteristik durch die Wahl der entsprechenden Exzenterscheibenform unterzogen werden.

Gemäß einer beispielhaften Ausführungsform der Erfindung wird eine Möbelmodul für ein Personentransportfahrzeug bereitgestellt, wobei das Möbelmodul eine oben beschriebene schienengebundene Möbeleinheit aufweist sowie eine Führungsschiene mit unterschiedlichen Krümmungsradien, wobei der erste und der zweite schienenläufige Möbelfuß jeweils eine Drehachse aufweist, um die sich die Möbeleinheit bei einer Verschiebung entlang der Führungsschiene bezüglich der Führungsschiene derart drehen kann, dass die schienengebundene Möbeleinheit über die schienenläufigen Möbelfüße in der Führungsschiene mit verschiedenen Krümmungsradien verfahrbar ist.

Auf diese Weise kann nicht nur ein Möbelstück bzw. eine Möbeleinheit bereitgestellt werden, sondern auch eine Moduleinheit, die etwa eine aufeinander abgestimmte Möbeleinheit und Führungsschiene aufweist. Dabei sei verstanden, dass eine derartige Moduleinheit beispielsweise eine Deckaufbaukomponente sein kann, die etwa als komplettes Zulieferteil auf einen bestehenden Bootsrumpf auf- bzw. eingesetzt werden kann.

Gemäß einer beispielhaften Ausführungsform der Erfindung weist die Führungsschiene einen Laufschlitz auf, in den eine Führungsvorrichtung des Möbelfußes über eine Unterseite bzw. Standfläche der Möbeleinheit hinaus einragt.

Gemäß einer beispielhaften Ausführungsform weist die Führungsschiene eine beidseitig des Laufschlitzes in von der Möbeleinheit abgewandten Richtung auskragende Wandung auf, die als Lauffläche für die Führungsvorrichtung des Möbelfußes geeignet ist.

Dabei kann eine entsprechende verbreiterte Lauffläche für beispielsweise eine Laufbuchse bereitgestellt werden. Die Lauffläche kann dabei von der Ebene der Auskragung sowohl nach oben auskragen als auch nach unten auskragen. Bei einer Auskragung nach oben kann die Lauffläche gleichzeitig auf der von der Lauffläche abgewandten Seite als Anlagefläche für einen Bodenbelag dienen, sodass beispielsweise ein Holzbodenbelag an dieser Stelle keine exponierte Kante aufweist, die anfällig für Beschädigungen ist. Die Auskragung mit der Lauffläche dient dabei auf der einen Seite quasi als Einfassung für einen Bodenbelag und auf der anderen Seite als Lauffläche. Jedoch kann die Lauffläche auch nach unten auskragen, wobei dann die Andruckfläche auf der Hinterschneidungsseite der Laufschiene höher liegen kann als die untere Begrenzungskante der Lauffläche. Eine entsprechend in Richtung der Möbeleinheit vorspringende Andruckfläche an der Auskragung des Möbelfußes kann dabei um die auskragende Lauffläche herumgreifen, um zuverlässig auf der Hinterschneidungsfläche der Laufschiene anzugreifen. Auf eine Auskragung kann auch verzichtet werden, wenn etwa kein Kantenschutz benötigt wird und die Materialstärke der Laufschiene so bemessen ist, dass eine Kante als Lauffläche ausreicht. In diesem Fall wird keine Auskragung als Laufflächenverbreiterung benötigt.

Gemäß einer beispielhaften Ausführungsform der Erfindung weist das Möbelmodul ferner einen Bodenbelag auf, der die Führungsschiene abdeckt, wobei der Bodenbelag oberhalb des Laufschlitzes eine Ausnehmung in Form des Laufschlitzes aufweist, wobei der Bodenbelag den Laufschlitz seitlich in einem Maß überragt, welches geringer ist als die Wandstärke einer um eine Führungsvorrichtung des Möbelfußes drehbar angeordneten Laufbuchse.

Insbesondere bei einem gleichbleibenden Wellendurchmesser der Führungsvorrichtung kann somit verhindert werden, dass die Welle gegen eine Holzkante eines Bodenbelages reibt oder stößt, da die entsprechende Wandstärke der Laufbuchse dafür sorgt, dass ein entsprechender Mindestabstand eingehalten wird. Auf diese Weise kann verhindert werden, dass eine exponierte Holz- oder Bodenbelagkante durch die Führungsvorrichtung des Möbelfußes bei einer Verschiebung der Möbeleinheit in Mitleidenschaft gezogen wird.

Gemäß einer beispielhaften Ausführungsform der Erfindung wird ein Wasserfahrzeug bereitgestellt mit einem Möbelmodul gemäß obiger Beschreibung, wobei das Wasserfahrzeug eine tragfähige Oberfläche aufweist, in die integral eine langgestreckte Absenkung eingeformt ist, wobei die Absenkung in Form und Umfang ausgelegt ist, die Führungsschiene derart aufzunehmen, dass die Führungsschiene unterhalb des Oberflächenniveaus der Oberfläche angeordnet ist.

Auf diese Weise kann die Führungsschiene vollständig in die Oberfläche des Wasserfahrzeugs abgesenkt werden, sodass ohne Probleme ein Bodenbelag ohne Absätze über die Absenkung hinaus bis an den Rand des Führungsschlitzes der Führungsschiene verlegt werden kann. Von außen ist dann lediglich ein schmaler Führungsschlitz sichtbar, jedoch die Führungsschiene im Wesentlichen vollständig durch den Bodenbelag abdeckbar. Es sei verstanden, dass sich zwischen der eigentlichen Oberfläche des Wasserfahrzeuges und dem Bodenbelag eine Unterkonstruktion befinden kann. In diesem Fall ist die Oberkante der Unterkonstruktion als Oberfläche des Wasserfahrzeuges zu verstehen, in dem Sinne, dass ein Bodenbelag ansatzlos über Teile der Führungsschiene hinweg verlegt werden kann.

Gemäß einer beispielhaften Ausführungsform der Erfindung wird ein Wasserfahrzeug bereitgestellt, bei dem die langgestreckte Absenkung im Querschnitt einen ersten Bereich und einen zweiten Bereich aufweist, wobei der zweite Bereich bezüglich der Oberfläche tiefer abgesenkt ist als der erste Bereich, wobei wenigstens ein Teil der Führungsschiene im ersten Bereich liegt und der Laufschlitz im zweiten Bereich liegt, wobei der zweite Bereich derart ausgestaltet ist, dass der zweite Bereich die Auskragung des beweglichen Teils des Möbelfußes aufnehmen kann.

Auf diese Weise kann eine im Querschnittsprofil gestufte Ausnehmung verwendet werden, die durch die Stufung eine zusätzliche Versteifung der Wasserfahrzeugoberfläche bereitstellen kann. Dabei ist die Absenkung insbesondere in Randbereichen lediglich so tief, dass die Führungsschiene, insbesondere deren Randbereiche aufgenommen werden können, während etwa ein Mittelbereich so tief ausgestaltet ist, dass die Führungsvorrichtung einschließlich der Auskragung dort aufgenommen werden kann, und zwar sowohl im festgelegten Zustand, als auch in einem Zustand, in dem die Möbeleinheit entlang der Führungsschiene bewegt werden kann.

Gemäß einer beispielhaften Ausführungsform wird in der Absenkung eine Drainage vorgesehen, die nach außerhalb des Bootsrumpfes führt.

Auf diese Weise kann etwa durch den Führungsschlitz der Führungsschiene eindringendes Wasser in Form von Regenwasser oder Spritzwasser so abgeführt werden, dass es nicht in das Innere des Wasserfahrzeugs gelangt, sondern nach außerhalb des Wasserfahrzeuges drainagiert wird.

Gemäß einer weiteren beispielhaften Ausführungsform der Erfindung wird ein Wasserfahrzeug bereitgestellt, welches eine Antriebsfreigabevorrichtung aufweist, sowie einen Positionssensor für Positionserkennung der Möbeleinheit, wobei die Antriebsfreigabevorrichtung ausgelegt ist, einen vorzusehenden Antrieb freizugeben, wenn sich die Möbeleinheit auf einer vom Positionssensor erfassten vorbestimmten Position befindet.

Auf diese Weise kann sichergestellt werden, dass ein Wasserfahrzeug, insbesondere ein Motorboot sich nur dann mit eigener Kraft fortbewegt, wenn sich die entsprechenden Möbeleinheiten an einer vorbestimmten Position befinden, die die Sicherheit der transportierten Personen sicherstellen. Der Positionssensor kann sich dabei sowohl ortsfest zum Bootsdeck befinden, als auch ortsfest zur beweglichen Möbeleinheit.

Die Erfindung stellt somit ein Möbelkonzept für ein Personentransportfahrzeug, ein Wasserfahrzeug bzw. Boot bereit mit einer Möbeleinheit, einem Möbelmodul bzw. einem Personentransportfahrzeug, Wasserfahrzeug bzw. Boot, bei dem eine Möbeleinheit mit zwei Möbelfüßen mit jeweils einer Drehachse bezüglich der Führungsschiene entlang der Führungsschiene mit verschiedenen Krümmungsradien verfahren werden kann.

Es sollte bemerkt werden, dass sich die im Folgenden beschriebenen Ausführungsformen der Erfindung gleichermaßen auf die Möbeleinheit, das Möbelmodul als auch das Personentransportfahrzeug bzw. Wasserfahrzeug beziehen. Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
- Fig. 1: zeigt eine Aufsicht auf einen Deckbereich eines Wasserfahrzeugs mit einer prinzipiellen Anordnung von Möbeleinheiten und einer Führungsschiene gemäß einer beispielhaften Ausführungsform der Erfindung.
- Fig. 2: zeigt eine Detailansicht einer Führungsvorrichtung in einer Führungsschiene in einer Aufsicht gemäß einer beispielhaften Ausführungsform der Erfindung.
- Fig. 3: zeigt eine weitere beispielhafte Ausführungsform einer Führungsvorrichtung eines Möbelfußes in einer Führungsschiene in einer Aufsicht.
- Fig. 4: zeigt eine Profilschnittansicht einer Schienenanordnung mit einer Führungsvorrichtung eines Möbelfußes in Bezug auf eine Deckoberfläche eines Wasserfahrzeugs gemäß einer beispielhaften Ausführungsform der Erfindung.
- Fig. 5: zeigt einen prinzipiellen Aufbau einer Hebemechanik zum Betätigen der beweglichen Teile der Möbelfüße gemäß einer beispielhaften Ausführungsform der Erfindung.
- Fig. 6: zeigt eine Detailansicht einer Möbelfußanordnung mit einem Drehteller und einer Auskragung gemäß einer beispielhaften Ausführungsform der Erfindung.
- Fig. 7: zeigt eine Profilschnittansicht eines schienenläufigen Möbelfußes mit einer in eine Führungsschiene eingreifenden Führungsvorrichtung gemäß einer beispielhaften Ausführungsform der Erfindung.
- Fig. 8: zeigt eine Detailansicht einer Laufbuchsen-/Laufflächenanordnung an der Führungseinrichtung gemäß einer beispielhaften Ausführungsform der Erfindung.
- Fig. 9: zeigt eine Ausführungsform der Erfindung mit vorgespanntem beweglichen Teil in einem festgelegten Zustand.
- Fig. 10: zeigt eine Ausführungsform der Erfindung mit vorgespanntem beweglichen Teil in einem gelösten Zustand.
- Fig. 11: zeigt eine Ausführungsform der Erfindung mit einer federnd gelagerten Gleit- bzw. Rollenauflage in einem festgelegten Zustand.
- Fig. 12: zeigt eine Ausführungsform der Erfindung mit einer federnd gelagerten Gleit- bzw. Rollenauflage in einem gelösten Zustand.
- Fig. 13: zeigt eine Ausführungsform der Erfindung mit einem beweglichen Teil und einem zweiten beweglichen Teil in einem festgelegten Zustand.
- Fig. 14: zeigt eine Ausführungsform der Erfindung mit einem beweglichen Teil und einem zweiten beweglichen Teil in einem gelösten Zustand.
- Fig. 15: zeigt einen prinzipiellen Aufbau einer Antriebsverriegelungsvorrichtung gemäß einer beispielhaften Ausführungsform der Erfindung.

Gleiche Teile sind in der Regel mit übereinstimmenden Bezugszeichen versehen.

### Detaillierte Beschreibung beispielhafter Ausführungsformen

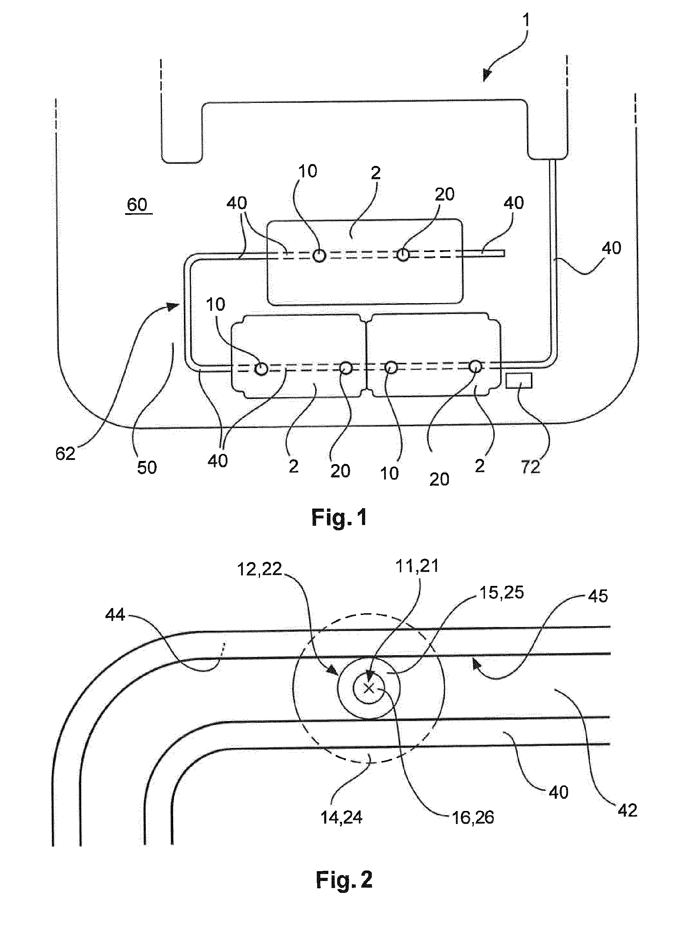

Fig. 1 zeigt eine Aufsicht auf den Heckbereich eines Wasserfahrzeuges. Dabei weist das Wasserfahrzeug 1 auf der Oberfläche des Deckbereiches eine Führungsschiene 40 auf, die verschiedene Abschnitte aufweist, welche eine unterschiedliche Krümmung aufweisen. Die in Fig. 1 gezeigte Führungsschiene weist teilweise gerade Abschnitte auf, die somit eine Krümmung von null aufweisen, ebenso wie Kurvenabschnitte, die eine verhältnismäßig große Krümmung aufweisen. Die in Fig. 1 gezeigten Möbeleinheiten 2 können beispielsweise ein Tisch oder Sitzgelegenheiten sein. Die Möbeleinheiten weisen zwei schienenläufige Möbelfüße 10, 20 auf. Mit diesen Möbelfüßen können die entsprechenden Möbeleinheiten 2 in der Führungsschiene 40 geführt werden und temporär festgelegt werden. Die Möbelfüße weisen eine Drehachse auf, sodass sich die Möbeleinheit 2 jeweils um die Drehachse des entsprechenden Möbelfußes 10, 20 drehen kann. Dies ist insbesondere dann notwendig, wenn die Möbeleinheit um eine Kurve der Führungsschiene gefahren wird, sodass sich die Möbeleinheit bezüglich der Führungsschiene drehen kann, insbesondere wenn beispielsweise der erste Möbelfuß 10 bereits um die Kurve gefahren wurde, sich jedoch der zweite Möbelfuß 20 noch auf dem geraden Abschnitt befindet. Da sich die Möbeleinheit 2 bereits bezüglich der Schiene dreht, wenn der erste Fuß um die Kurve gefahren ist, muss sich die Möbeleinheit 2 sowohl um die Drehachse des ersten Möbelfußes 10 als auch um die Drehachse des zweiten Möbelfußes 20 drehen können. Die Führungsschiene 40 kann dabei in die Bootsoberfläche 50 eingesenkt sein, sodass beispielsweise ein Bodenbelag 60 über die Führungsschiene hinweg verlegt werden kann. Dies erlaubt eine Verlegung des Bodenbelages, z.B. Holz derart, dass sich im Bodenbelag lediglich noch eine laufschlitzförmige Ausnehmung 62 befindet, die es ermöglicht, dass die Führungsvorrichtungen der Möbelfüße 10, 20 in die Führungsschiene einragen können. Obgleich die Führungsschiene breit sein kann, ist die schlitzförmige

Ausnehmung im Bodenbelag schmal. Dies trägt zum einen zu einer optisch unauffälligen Erscheinung bei, verringert jedoch auch die Verletzungsgefahr, da das Risiko vermindert wird mit etwa Zehen in den Führungsschlitz zu gelangen. In Fig. 1 ist ferner ein Positionssensor 72 gezeigt, der beispielsweise die Position von Möbelstücken überwachen kann, um auf diese Weise eine Antriebseinrichtung des Wasserfahrzeuges freizugeben, wenn sich die Möbeleinheiten in einer Position befinden, die eine Sicherheit der auf dem Wasserfahrzeug befindlichen Personen sicherstellt. Es sei angemerkt, dass die Positionserfassungsvorrichtung 72 dabei sowohl die Position erfassen kann als auch den Festlegungszustand der Möbeleinheiten 2. Der Positionssensor kann auch in der entsprechenden Möbeleinheit vorgesehen sein und Positionsmarken auf der Deckoberfläche detektieren.

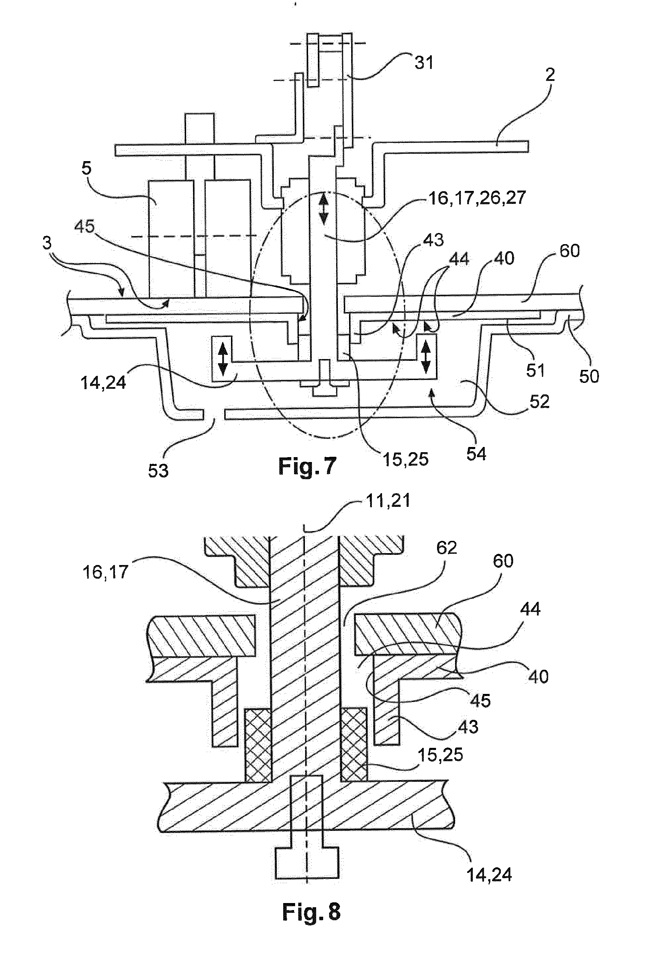

Im Folgenden wird nun der detaillierte Aufbau der erfindungsgemäßen Vorrichtung beschrieben. Fig. 2 zeigt eine Aufsicht auf ein Detail der Führungsschiene mit einem darin befindlichen Führungsteil. In Fig. 2 ist der Führungsteil zu sehen, der in den Laufschlitz 42 der Führungsschiene 40 einragt. Der Führungsteil weist dabei eine Drehachse 11, 21 auf, um die sich die hier nicht gezeigte Möbeleinheit bezüglich der Laufschiene 40 drehen kann. Der bewegliche Teil des Möbelfußes weist hier eine Auskragung 14, 24 auf, die einen größeren Durchmesser aufweist als die Breite des Führungsschlitzes 42. Auf diese Weise wird verhindert, dass der Möbelfuß aus der Führungsschiene entfernt werden kann. Die Auskragung greift dabei hinter Hinterschneidungen der Führungsschiene entlang der Führungsschiene, sodass die Auskragung 14, 24 gegen die Hinterschneidungsflächen der Führungsschiene zum Andruck gebracht werden können, um das Möbelstück in der Führungsschiene 40 festzulegen. In Fig. 2 ist ferner eine um den Führungsstift 16, 26 herum drehbar angeordnete Laufbuchse 15, 25 zu sehen, die eine Bewegung des Führungsstiftes 16, 26 innerhalb des Führungsschlitzes 42 erleichtert, da die Laufbuchse an einer Lauffläche der Führungsschiene abrollen kann. Dies wird detaillierter beschrieben mit Bezugnahme auf die Figuren 7 und 8. Es sei angemerkt, dass an einzelnen Stellen der Führungsschiene der Führungsschlitz so erweitert sein kann, dass dort der Möbelfuß mit der Auskragung aus der Führungsschiene entfernt werden kann, um etwa die Möbeleinheiten austauschen zu können.

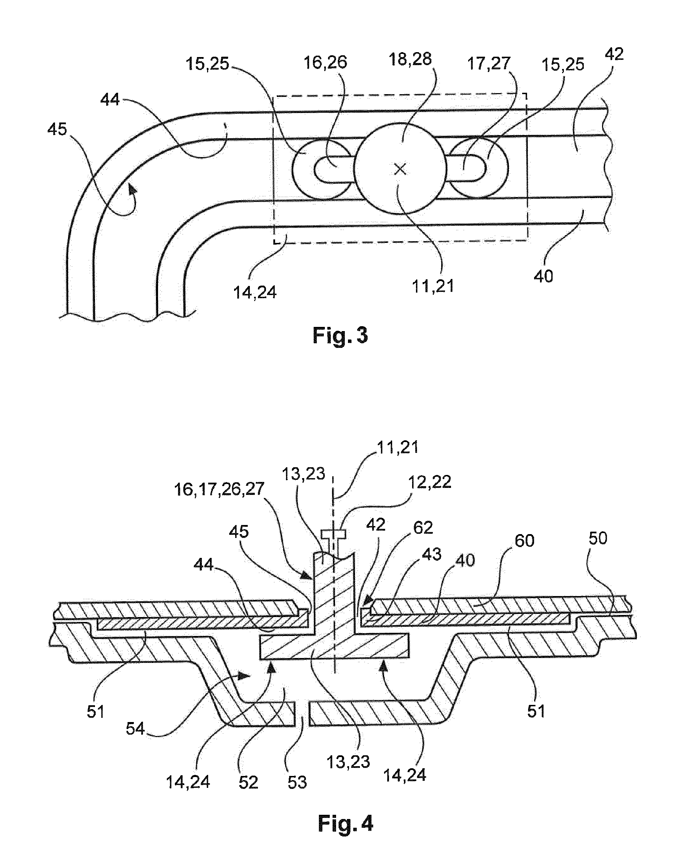

Fig. 3 zeigt eine weitere Ausführungsform einer Führungsvorrichtung, die jedoch nicht nur einen Führungsstift an einem Möbelfuß aufweist, sondern zwei Führungsstifte 16, 26 sowie 17, 27. Diese beiden Führungsstifte sind an einem Drehteller 18, 28 befestigt und ragen ebenfalls in den Laufschlitz 42 ein. Auch hier können Laufbuchsen 15, 25 vorgesehen sein, sodass die Laufbuchsen an einer Lauffläche der Führungsschiene abrollen können. Die Drehachse 11, 21 befindet sich dabei in der Mitte des Drehtellers 18, 28, sodass sich die Möbeleinheit bezüglich dieser Drehachse gegenüber der Führungsschiene 40 drehen kann, wenn sie beispielsweise in einen Führungsschienenabschnitt mit einer sich ändernden Krümmung bewegt wird. Die Auskragung 14, 24 ragt dabei wiederum hinter die Hinterschneidung 44 der Laufschiene 40, sodass der Möbelfuß nicht aus der Führungsschiene 40 entfernt werden kann. Die hier gezeigte Hinterschneidung 14, 24 ist mit beiden Führungsstiften 16, 26 bzw. 17, 27 verbunden, sodass diese auch zu einer Stabilität der Führungsstifte zueinander beiträgt.

Fig. 4 zeigt eine Profilschnittansicht einer Schienenanordnung mit darin befindlichem Führungsstift. Die Führungsschiene 40 befindet sich dabei in einer Absenkung 54 in der Bootsoberfläche 50. Die Absenkung kann dabei zwei Bereiche aufweisen, einen verhältnismäßig flachen Bereich 51 sowie einen tieferen Bereich 52, der sich zwischen den beiden flachen Bereichen 51 in der Fig. 4 befindet. Die flachen Bereiche 51 können dabei zumindest Teile der Führungsschiene 40 aufnehmen. In dem tiefen Bereich 52 der Absenkung 54 kann die Führungsvorrichtung des Möbelfußes einragen und auf diese Weise genügend Bewegungsspielraum erhalten, sodass der bewegliche Teil abgesenkt und angehoben werden kann und sich im abgesenkten Bereich innerhalb des tiefen Bereiches 52 bewegen kann, ohne mit der Oberfläche der Ausnehmung 54 in Berührung zu kommen. An der tiefsten Stelle der Ausnehmung kann eine Drainage 53 vorgesehen sein, die beispielsweise nach außerhalb des Bootsrumpfes führt, um sich ansammelndes Wasser abzuführen. Durch die Absenkung der Bootsoberfläche und der Einbettung der Führungsschiene 40 kann ein Bodenbelag 60 bündig über die Bootsoberfläche 50 weiter über die Schiene verlegt werden, sodass lediglich ein schmaler Bereich 62des Bodenbelages 60 ausgenommen ist, der mit dem Führungsschlitz 42 der Schiene 40 korrespondiert. Die Führungsschiene kann dabei eine Auskragung 45 aufweisen, die in der in Fig. 4 gezeigten Ausführungsform nach oben auskragt. Auf diese Weise kann die Auskragung 45 als Anlagefläche für den Führungsteil 12, 22 des Möbelfußes dienen, sodass eine zuverlässige Führung des Führungsstiftes 16, 17, 26, 27 erfolgen kann. Andererseits kann die nach oben ausgeführte Auskragung dazu dienen, die Kanten des Bodenbelages 60 einzufassen, sodass dieser an dieser Stelle nicht ausbrechen kann. Der Führungsteil 12, 22 kann dabei ein beweglicher Teil 13, 23 sein, der angehoben und abgesenkt werden kann. Im abgesenkten Zustand, etwa dem Zustand in Fig. 4 kann sich die Führungsvorrichtung bzw. der Führungsstift 16, 17, 26, 27 in der Führungsschiene entlang der Anlagefläche 45 bewegen. Wird der bewegliche Teil 13, 23 angehoben, so drückt die Auskragung 14, 24 gegen die Hinterschneidungsfläche 44, sodass sich die Haftreibung erhöht und auf diese Weise der bewegliche Teil von unten an der Führungsschiene 40 festgelegt wird. Es sei angemerkt, dass die Festlegung nicht zwingend über eine Haftreibungsverbindung erfolgen muss, sondern auch eine formschlüssige Verbindung erfolgen kann, wie zwischen einer Rastausnehmung und einem Rastvorsprung, die jedoch in Fig. 4 hier nicht gezeigt ist. Wie im Folgenden mit Bezugnahme auf die Figuren 7 und 8 noch beschrieben wird, kann die Auskragung 43 auch nach unten auskragen. Es sei angemerkt, dass die Führungsschiene nicht zwingend symmetrisch aufgebaut sein muss, sondern auch ein unsymmetrisches Profil aufweisen und lediglich auf einer Seite eine Hinterschneidung aufweisen kann.

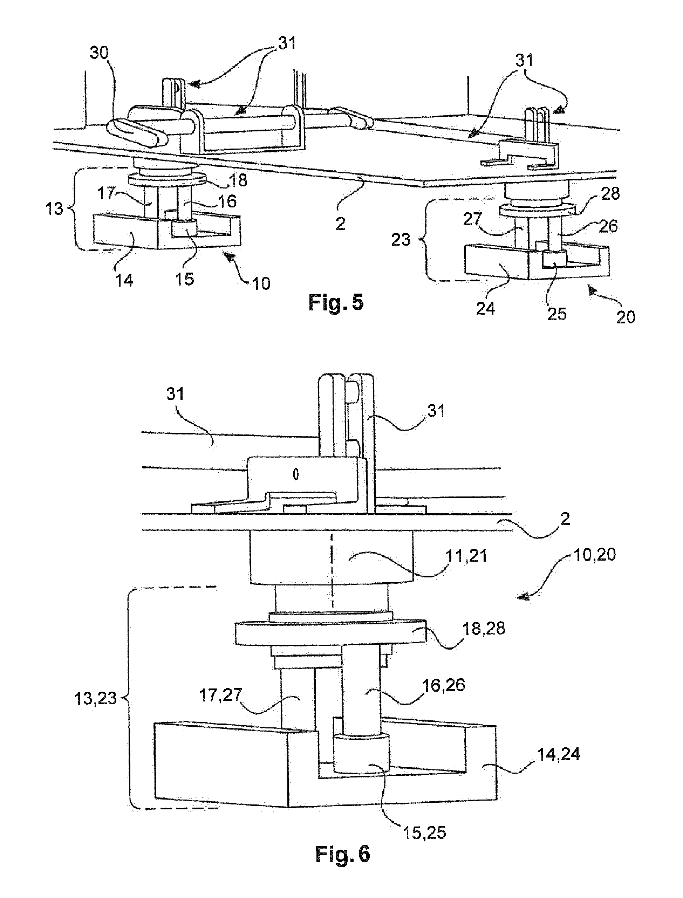

Fig. 5 zeigt eine beispielhafte Ausführungsform einer Hebelanordnung, wobei mittels eines einzigen Hebels 30 über ein entsprechende Hebelgestänge 31 die beweglichen Teile 13, 23 der Möbelfüβe 10, 20 auf und ab bewegt werden können. Die in Fig. 5 gezeigten Möbelfüβe weisen dabei eine Ausführungsform auf mit einem Drehteller 18, 28 sowie jeweils zwei Führungsstiften 16, 17 bzw. 27, 26 je Möbelfuß. Es sei jedoch verstanden, dass auch eine Anordnung mit nur einem einzigen Führungsstift je Möbelfuß über eine derartige Hebelanordnung betätigt werden kann. In der in Fig. 5 gezeigten Ausführungsform ist um die entsprechenden Führungsstifte eine Laufbuchse 15, 25 angeordnet, die an der Anlagefläche 45 der Führungsschiene (hier nicht gezeigt) anliegt und abrollen kann, um im abgesenkten Zustand, das heißt dem freigegebenen Zustand die Möbeleinheit leichter und reibungsfreier bewegen zu können. In der in Fig. 5 gezeigten Ausführungsform weist die Auskragung 14, 24 eine beidseitig nach oben in Richtung der Möbeleinheit ragende weitere Auskragung bzw. Vorsprung auf, um eine definierte Anlagefläche an einer Hinterschneidungsfläche 44 einer Führungsschiene 40 bereitzustellen. Mit Bezugnahme auf Fig. 6 wird nun der detaillierte Aufbau eines derartigen Möbelfußes beschrieben.

Fig. 6 zeigt eine detaillierte Ansicht eines Möbelfußes mit zwei Führungsstiften. Der Möbelfuß ist beispielsweise an der Unterseite einer Möbeleinheit 2 montiert und weist einen beweglichen Teil 13, 23 auf, der zu einem feststehenden Teil des Möbelfußes bzw. der Möbeleinheit 2 beweglich ist. Der bewegliche Teil kann mittels eines Hebels und eines Hebelgestänges 31 auf und ab bewegt werden, um die Auskragung 14, 24 gegen eine hier nicht gezeigte Hinterschneidungsfläche einer Führungsschiene zu drücken. Die Fig. 6 gezeigte Ausführungsform weist einen Drehteller 18, 28 auf, der um eine Drehachse 11, 21 herum drehbar angeordnet ist. An dem Drehteller 18, 28 befinden sich zwei Führungsstifte 17, 27 bzw. 16, 26. Die Führungsstifte weisen in der in Fig. 6 gezeigten Ausführungsform jeweils eine Führungsbuchse 15, 25 auf, die eine reibungsvermindernde Wirkung bei der Bewegung des Möbelfußes innerhalb der Führungsschiene bewirken.

Fig. 7 zeigt eine Profilschnittansicht mit einem Möbelfuß, der an einer Bodenplatte einer Möbeleinheit 2 befestigt ist. Ferner befindet sich an der Bodenplatte der Möbeleinheit 2 auch eine Rolle bzw. Gleitkufe oder -fuß 5, der auf der Oberfläche des Bodenbelages 60 steht und an der Berührungsfläche eine Standfläche 3 definiert. Mittels des Hebelgestänges 31 ist der bewegliche Teil des Möbelfußes auf und ab bewegbar, wie durch die Pfeile verdeutlicht wird. Durch ein Absenken befindet sich beispielsweise der Möbelfuß in einem Zustand, wie er in Fig. 7 gezeigt wird. Dabei sind die Auskragungen 14, 24 nicht in Anlage mit der Hinterschneidungsfläche 44 der Führungsschiene, sodass sich die Laufbuchse 15, 25 an der Anlagefläche 45 der Auskragung 43 abrollen kann. Wird jedoch der bewegliche Teil durch das Hebelgestänge 31 nach oben bewegt, so drücken die Vorsprünge, hier die Enden des Us der U-förmigen Auskragungen 14, 24 gegen die Hinterschneidungsfläche 44 der Schiene 40, sodass an dieser Stelle die Haftreibung erhöht wird. Auf diese Weise wird über den Möbelfuß und das Hebelgestänge eine entsprechende Kraft auf die Rolle bzw. den Fuß 5 der Möbeleinheit ausgeübt, sodass diese auf die Standfläche 3 gepresst werden. Auf diese Weise erhöht sich die Haftreibung und die Möbeleinheit 2 kann nicht ohne Weiteres weiterbewegt werden. Je nach Beschaffenheit der Anlagefläche der Auskragungen 14, 24 und der Hinterschneidungsfläche 44 bzw. der Rolle/Fuß/Kufe 5 und des Bodenbelages wirkt eine Haftreibung zwischen der Anlagefläche der Auskragungen 14, 24 und der Hinterschneidungsfläche 44 bzw. der Rolle/Fuß/Kufe 5 und des Bodenbelages.

Fig. 8 zeigt eine detaillierte Ansicht des in Fig. 7 umkreisten Bereiches. Dabei ist erkennbar, dass der Bodenbelag 60 über die Führungsschiene 40 hinüber ragt, sodass die Führungsschiene selbst von außen verdeckt ist und nicht sichtbar ist. Für den Betrachter ist von außen lediglich die schmale Ausnehmung 62 sichtbar, in den der Führungsstift des Möbelfußes hineinragt. Dabei kragt der Bodenbelag 60 weniger stark über die Führungsschiene 40 hinaus als die Wanddicke der Laufbuchse 15, 25. Dadurch wird erreicht, dass sich der Führungsstift 16, 17 quasi durch den Abstandshalter der Laufbuchse 15, 25 gegenüber der Auskragung 43 der Führungsschiene 40 nicht zu nah an die Kante des Bodenbelages heran bewegen kann. So kann verhindert werden, dass der Führungsstift 16, 17 mit der Kante des Bodenbelages 40 in Verbindung kommt und diesen eventuell beschädigt oder in Mitleidenschaft zieht. Es sei verstanden, dass dies jedoch auch durch einen unterschiedlichen Durchmesser der Führungsstiftes im Bereich der Laufbuchse und dem Teil des Führungsstiftes erreicht werden kann, der durch den Schlitz hindurch tritt. In diesem Fall kann die Wandstärke der Laufbuchse auch geringer sein als die Überkragung des Bodenbelages, insbesondere wenn der Durchmesser des Führungsstiftes im Bereich der Laufbuchse größer ist.

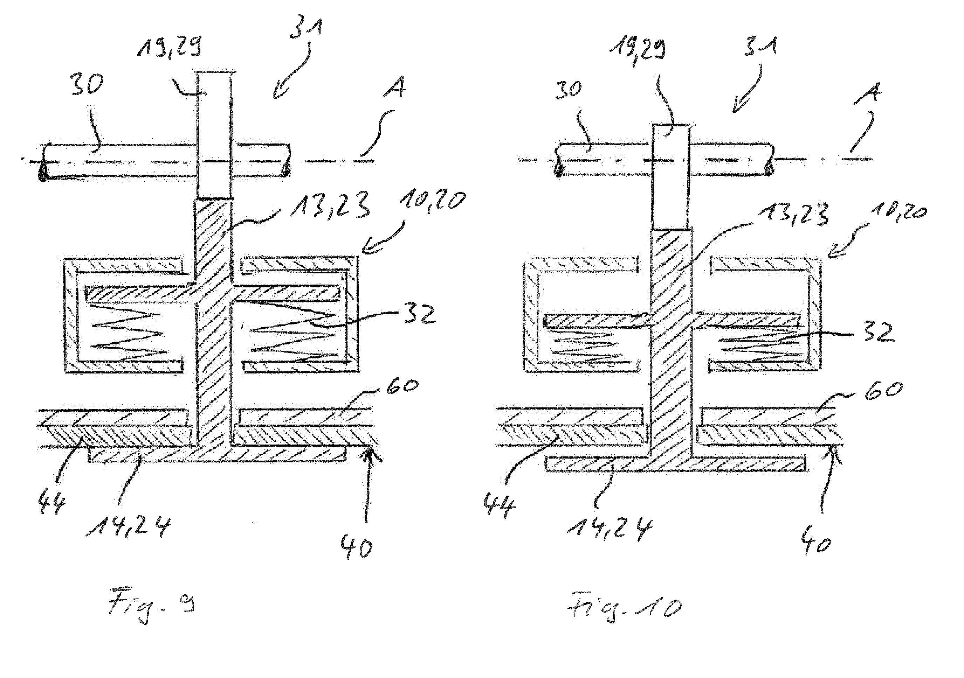

Fig. 9 zeigt eine Ausführungsform der Erfindung mit vorgespanntem beweglichen Teil in einem festgelegten Zustand und Fig. 10 zeigt eine Ausführungsform der Erfindung mit vorgespanntem beweglichen Teil in einem gelösten Zustand. Die in Fig. 9 gezeigte schienengebundene Möbeleinheit weist einen beweglichen Teil 13, 23 auf, der mit einer Federanordnung 32 derart vorgespannt ist, dass die Auskragung 14, 24 in einer ersten, die Möbeleinheit an der Führungsschiene festlegenden Position gegenüber der Hinterschneidung 44 der vorzusehenden Führungsschiene 40 mit einer Kraft beaufschlagt ist. Fig. 10 zweigt die schienengebundene Möbeleinheit, mit dem beweglichen Teil 13, 23, der mit einer Federanordnung 32 derart vorgespannt ist, dass der bewegliche Teil in einer zweiten, die Möbeleinheit von der Führungsschiene freigebenden Position durch den Hebelanordnung 30, 31 eine der Kraft entgegengesetzte Gegenkraft auf den beweglichen Teil wirkt, der die Auskragung von der Hinterschneidung beabstandet hält. Ein Exzenter 19, 29 betätigt den bewegliche Teil gegenüber der Möbeleinheit. Die Achse A, um den sich die Hebelstange 30 dreht und der Möbelfuß 10, 20 sind fest mit der Möbeleinheit verbunden. Bezüglich des Möbelfußes 10, 20 stützt sich der bewegliche Teil 13, 23 durch die Feder 32 ab, sodass die Auskragung 14, 24 gegen die Hinterschneidung 44 gezogen wird. Die Exzenterscheibe 19, 29 muss dabei nicht im Kontakt mit dem beweglichen Teil 13, 23 stehen, da die Auskragung 14, 24 den Anschlag bildet.

Wenn die Exzenterscheibe 19, 29 gedreht wird, drückt diese den beweglichen Teil entgegen der Federkraft der Druckfeder 32 hinunter und drückt die Auskragung 14, 24 von der Hinterschneidung 44 weg und gibt diese frei. Alternativ oder zusätzlich kann auf der gegenüberliegenden Seite auch eine hier nicht gezeigte Zugfeder vorgesehen sein, die jedoch die gleiche Kraftwirkung auf den beweglichen Teil 13, 23 hat wie die hier beschriebene Druckfeder. Die Exzenterscheibe übt eine freigebende Gegenkraft aus, wie der Fig. 10 zu entnehmen ist. Eine Gleit- bzw. Rollauflage ist hier aus übersichtlichkeitsgründen nicht gezeigt. Es sein verstanden, dass der Festlegungsmechanismus mit dem beweglichen Teil auch in eine, Gleit- bzw. Rollauflageelement 5 integriert sein kann, bzw. der Möbelfuß 10, 20 auch selbst die Standfläche der Möbeleinheit auf der Bootsdeckoberfläche bereitstellen kann. Es sein auch verstanden, dass unter dem Hebelmechanismus bzw. einer Hebelanordnung nicht zwingend ein Hebelgestänge verstanden werden kann, sondern auch ein auf dem Prinzip der schiefen Ebene beruhender Exzentermechanismus.

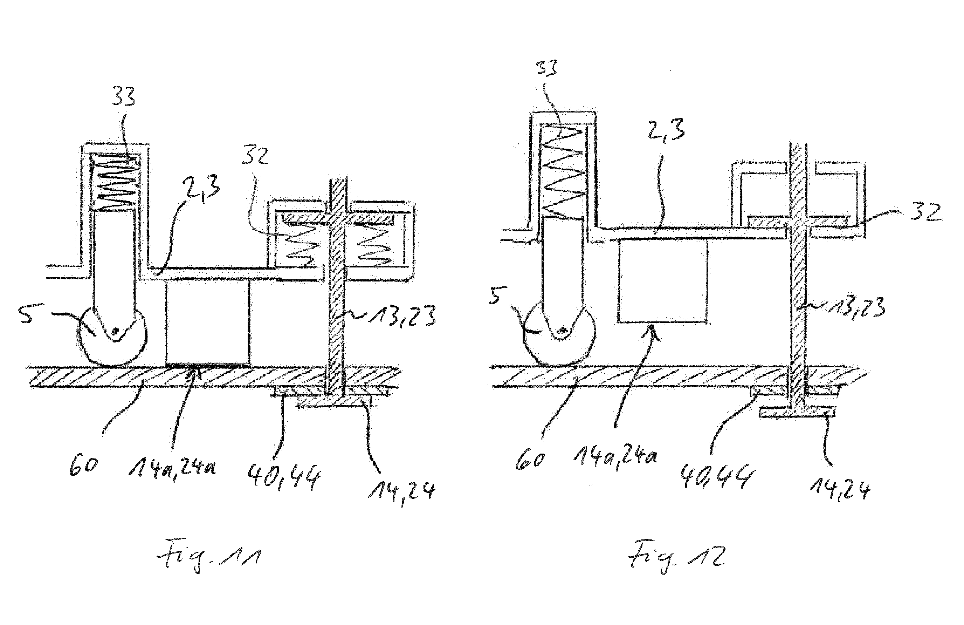

Fig. 11 zeigt eine Ausführungsform der Erfindung mit einer federnd gelagerten Gleit- bzw. Rollenauflage in einem festgelegten Zustand. Fig. 12 zeigt eine Ausführungsform der Erfindung mit einer federnd gelagerten Gleit- bzw. Rollenauflage in einem gelösten Zustand. Die schienengebundene Möbeleinheit weist gemäß Fg. 11 und 12 ferner eine der vorzusehenden Führungsschiene 40 zugewandten Anlagefläche 14a, 24a und eine Gleit- bzw. Rollauflage 5 auf, wobei die Gleit- bzw. Rollauflage in Richtung der vorzusehenden Führungsschiene federnd gelagert ist. Die federnd gelagerte Gleit- bzw. Rollauflage hält in einer zweiten, die Möbeleinheit von der Führungsschiene freigebenden Position, Fig. 12, die Anlagefläche 14a, 24a von einer der Anlagefläche gegenüberliegenden Bootsfläche 60 beabstandet. Die in den Fig. 11 und 12 gezeigte Möbeleinheit 2, 3 weist je nach Zustand eine angehobene Position, Fig. 12, oder eine abgesenkte Position, Fig. 11, auf. In der abgesenkten Position wird beispielsweise der bewegliche Teil 13, 23 bezüglich der Möbeleinheit nach oben gezogen und gegen die Hinterschneidung 44 gezogen. Das kann beispielsweise durch eine Feder 32 erfolgen, die in Fig. 12 nicht gezeigt ist, aber analog der Fig. 9, 10 und 11 eingesetzt ist. Durch diese Federkraft kann die Möbeleinheit 2, 3 entgegen der Federkraft der Feder 33 soweit nach unten gezogen werden, bis die Auflagefläche 14a, 24a auf dem Bootsdeck 60 zu liegen kommt. Die Möbeleinheit ruht dann nicht mehr auf den Rollen 5, sondern auf der Auflagefläche 14a, 24a. Diese kann großflächiger ausgestaltet sein, um eine geringere Flächenbelastung auf dem Bootsdeck zu gewährleisten. Die Federkraft der Federn 32 und 33 ist aufeinander und entsprechend auf das Gewicht der Möbeleinheit angepasst. Die Federn 32, 33 können so bemessen sein, dass bereits durch eine Gebrauchsbelastung, etwa eine sitzende Person auf einem Sofa als Möbeleinheit, die Anlagefläche 14a, 24a auf dem Bootsdeck aufliegt, oder aber erst eine Freigabe des beweglichen Teils 13, 23 und die Feder 32 eine entsprechende Kraft ausüben, jedoch eine Gebrauchsbelastung noch im ustand der Fig. 12 ist. Dadurch kann etwa ein Sofa als Möbeleinheit auch verschoben werden, wenn bereits eine Person darauf sitzt.

Es sein verstanden, dass der Federmechanismus 32 alternativ auch so eingesetzt werden kann, dass die Feder die Möbeleinheit freigibt, also die Auskragung 14, 24 von der Hinterschneidung 44 wegdrückt. In diesem, hier nicht illustrierten Fall ist die Kraftwirkung der Feder in Bezug auf den beweglichen Teil umgekehrt. In diesem Fall zieht dann ein entsprechender, hier nicht gezeigter Hebelmechanismus den beweglichen Teil 13, 23 entgegen der Federkraft 32 an, sodass die Auskragung 14, 24 dann an der Hinterschneidung 44 anliegt. Die Feder 32 wird dann z.B. für diesen Anwendungsfall auf der anderen Seite der waagerechten Scheibe des beweglichen Teils 13, 23 angebracht und drückt gegen den oberen Rand statt den unteren Rand des Federkastens, wie in Fig. 11 gezeigt ist. Um Unebenheiten auszugleichen kann im senkrechten Stang des beweglichen Teils 13, 23 eine hier nicht gezeigte weitere Feder angeordnet sein, um die Auskragung dann federnd gegenüber dem restlichen Teil des beweglichen Teils zu lagern. Die Feder 33 kann natürlich auch zur Abfederung des Möbels selbst verwendet und bemessen sein.

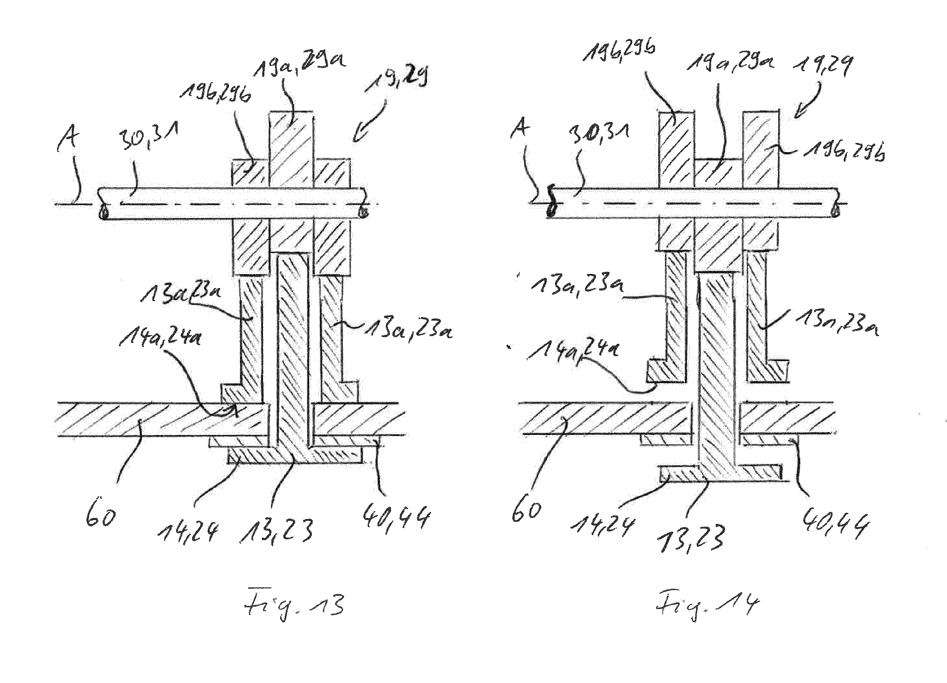

Fig. 13 zeigt eine Ausführungsform der Erfindung mit einem beweglichen Teil und einem zweiten beweglichen Teil in einem festgelegten Zustand. Fig. 14 zeigt eine Ausführungsform der Erfindung mit einem beweglichen Teil und einem zweiten beweglichen Teil in einem gelösten Zustand. Der schienenläufige Möbelfuß 10, 20 weist neben dem (ersten) bewegliche Teil 13, 23 einen zweiten beweglichen Teil 13a, 23a auf. Der zweite bewegliche Teil hat eine der vorzusehenden Führungsschiene zugewandte Anlagefläche 14a, 24a. Der erste bewegliche Teil 13, 23 ist gegenüber dem zweiten beweglichen Teil mittels der Exzentervorrichtung 19, 29 derart zwischen der ersten und der zweiten Position bewegbar, dass in der ersten Position, Fig. 13, die Auskragung 14, 24 gegenüber der Anlagefläche 14a, 24a derart mit einer Kraft beaufschlagbar ist, dass der wenigstens eine schienengebundene Möbelfuß gegenüber der vorzusehenden Führungsschiene festlegbar ist In der zweiten Position, Fig. 14, ist der wenigstens eine schienengebundene Möbelfuß gegenüber der vorzusehenden Führungsschiene bewegbar. In Fig. 13 und 14 sind aus übersichtlichkeitsgründen weder die Rollen oder Gleitauflagen gezeigt, noch die Chassisteile des Möbeleinheit. In der hier gezeigten Ausführungsform kann die Möbeleinheit ohne ein Absenken oder Anheben freigegeben werden, ohne dass eines der Teile 14, 24 oder 14a, 24a an der Hinterschneidung oder der Bootsdeckfläche anliegt. Die die Auskragung 14, 24 drückt in der festlegenden Stellung, Fig. 13, gegen die Hinterschneidung 44 der vorzusehenden Führungsschiene 40, und die Anlagefläche 14a, 24a drückt gegen eine Gegenseite der Hinterschneidung der vorzusehenden Führungsschiene, hier die Bootsoberfläche 60. Durch die unterschiedlichen Exzenterrichtungen der ersten und zweiten Exzenterscheibe und der Form der ersten und zweiten Exzenterscheibe kann eine gewünschte Bewegungscharakteristik des ersten und zweiten beweglichen Teils zueinenander und zu der Schiene eingestellt werden.

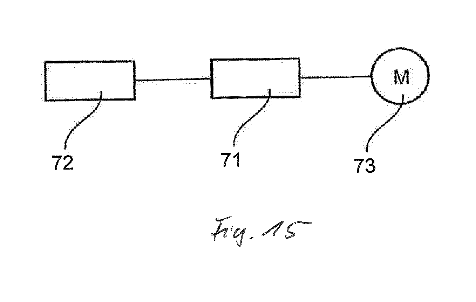

Fig. 15 zeigt eine schematische Anordnung einer Verschaltung eines Antriebs 73 sowie einem Positionssensor 72 und einer Antriebsfreigabevorrichtung 71. Der Positionssensor 72 kann dabei beispielsweise die Position und die Verriegelungsstellung der Möbeleinheit auf dem Bootsdeck erfassen und bei einer entsprechenden Erfassung der Möbeleinheit in einer vorbestimmten Position ein Signal an die Antriebsfreigabevorrichtung 71 weitergeben. Diese kann beispielsweise dann einen Bootsantrieb 73 freigeben, sodass ein Boot sich nur dann aus eigener Kraft bewegen kann, wenn sich die entsprechenden Möbeleinheiten an einer vorbestimmten Stelle befinden, die eine Sicherheit der auf dem Boot befindlichen Personen gewährleisten. Der Positionssensor kann dabei sowohl am Bootsdeck als auch an den Möbeleinheiten angeordnet sein. Über entsprechende Positionsmarken kann der Sensor gegebenenfalls unterschiedliche Möbeleinheiten differenzieren.

Es sollte angemerkt werden, dass die vorliegende Erfindung nicht nur auf Wasserfahrzeugen verwendet werden kann, sondern ebenso auch auf Landfahrzeugen wie in Bussen, Wohnmobilen, oder in Zügen bzw. Flugzeugen.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 1: Personentransportfahrzeug, Wasserfahrzeug, Boot
- 2: Möbeleinheit
- 3: Standfläche der Möbeleinheit, Unterseite der Möbeleinheit
- 4: Möbelmodul
- 5: Rolle, Gleiter, Kufe
- 10: erster schienenläufiger Möbelfuß
- 11/21: Drehachse des ersten/zweiten schienenläufigen Möbelfußes
- 12/22: Führungsteil des ersten/zweiten schienenläufigen Möbelfußes
- 13/23: (erster) beweglicher Teil des ersten/zweiten schienenläufigen Möbelfußes
- 13a/23a: zweiter beweglicher Teil des ersten/zweiten schienenläufigen Möbelfußes
- 14/24: Auskragung des ersten/zweiten schienenläufigen Möbelfußes
- 14a/24a: Anlagefläche des ersten/zweiten schienenläufigen Möbelfußes bzw. des zweiten beweglichen Teils bzw. der Möbeleinheit
- 15/25: drehbare Laufbuchse des ersten/zweiten schienenläufigen Möbelfußes
- 16/26: erster Führungsstift des ersten/zweiten schienenläufigen Möbelfußes
- 17/27: zweiter Führungsstift des ersten/zweiten schienenläufigen Möbelfußes
- 18/28: Drehteller des ersten/zweiten schienenläufigen Möbelfußes
- 19/29: Exzenteranordnung
- 19a/29a: erste Exzenterscheibe
- 19b/29b: zweite Exzenterscheibe
- 20: erster schienenläufiger Möbelfuß
- 30: Hebel zur Festlegung des ersten/zweiten schienenläufigen Möbelfußes
- 31: Hebelgestänge
- 32: Andruckfeder beweglicher Teil
- 33: Feder zur federnden Lagerung des Gleitfußes, der Kufe oder der Rolle
- 40: Führungsschiene
- 42: Laufschlitz der Führungsschiene
- 43: Auskragung/Wandung am Laufschlitz
- 44: Hinterschneidung an der Führungsschiene
- 45: Lauffläche an der Führungsschiene
- 50: Bootsoberfläche
- 51: erster Bereich einer Absenkung in der Bootsoberfläche
- 52: zweiter Bereich einer Absenkung in der Bootsoberfläche
- 53: Drainage einer Absenkung in der Bootsoberfläche
- 54: Absenkung
- 60: Fußbodenbelag
- 62: Laufschlitzförmige Ausnehmung im Fußbodenbelag
- 71: Antriebsfreigabevorrichtung
- 72: Positionsensor
- 73: Bootsantrieb
- A: Drehachse einer Hebelanordnung

## Patentansprüche

1. Schienengebundene Möbeleinheit für ein Personentransportfahrzeug (1), wobei die Möbeleinheit an einer Personentransportfahrzeug vorzusehenden Führungsschiene (40) mit unterschiedlichen Krümmungsradien befestigbar ist, wobei die Möbeleinheit (2) aufweist:
einen ersten schienenläufigen Möbelfuß (10) und einen zweiten schienenläufigen Möbelfuß (20) zur Befestigung der schienengebundenen Möbeleinheit an der vorzusehenden Führungsschiene,
wobei der zweite schienenläufige Möbelfuß von dem ersten schienenläufigen Möbelfuß beabstandet ist,
wobei der erste und zweite schienenläufige Möbelfuß jeweils eine Drehachse (11, 21) aufweist, um die sich die Möbeleinheit bei einem Verschieben entlang der Führungsschiene bezüglich der Führungsschiene derart drehen kann, dass die schienengebundene Möbeleinheit über die schienenläufigen Möbelfüße in einer Führungsschiene mit unterschiedlichen Krümmungsradien verfahrbar ist.

2. Schienengebundene Möbeleinheit gemäß Anspruch 1, wobei die schienengebundene Möbeleinheit (2) eine Unterseite (3) aufweist und wenigstens einer der schienenläufigen Möbelfüße (10, 20) eine über die Unterseite hinausragende Führungsvorrichtung (12, 22) zum Führen des Möbelfußes in einem Laufschlitz (42) der vorzusehenden Führungsschiene (40) aufweist, wobei die Führungsvorrichtung von dem wenigstens einen schienenläufigen Möbelfuß einen beweglichen Teil (13, 23) aufweist, der eine Bewegungsrichtungskomponente aufweist, die orthogonal zur Unterseite verläuft, wobei der bewegliche Teil eine Auskragung (14, 24) parallel zur Unterseite derart aufweist, dass die Auskragung hinter eine Hinterschneidung (44) der vorzusehenden Führungsschiene greift, wobei der bewegliche Teil mit einer Kraft beaufschlagbar ist, dass er derart gegen die Hinterschneidung der vorzusehenden Führungsschiene drückt, dass die beaufschlagende Kraft auf eine Standfläche der Möbeleinheit wirkt.

3. Schienengebundene Möbeleinheit gemäß Anspruch 2, wobei die Führungsvorrichtung (12, 22) eine um eine Bewegungsachse des beweglichen Teils (13, 23) drehbare Laufbuchse (15, 25) aufweist zur Anlage an einer Lauffläche (45) der vorzusehenden Führungsschiene (40).

4. Schienengebundene Möbeleinheit gemäß einem der Ansprüche 2 und 3, wobei wenigstens einer der schienenläufigen Möbelfüße (10, 20) einen Drehteller (18, 28) aufweist, wobei die Führungsvorrichtung (12, 22) zwei von dem Drehteller über eine Unterseite (3) der Möbeleinheit (2) auskragende Führungsstifte (16, 17; 26, 27) aufweist, wobei der Drehteller bezüglich der schienengebundenen Möbeleinheit um die Drehachse (11,21) drehbar gelagert ist, wobei die Führungsstifte in einen Laufschlitz (42) der vorzusehenden Führungsschiene (40) eingreifen, wobei sich die Auskragung (14, 24) von den Führungsstiften derart erstreckt, dass die Auskragung hinter die Hinterschneidung (44) der vorzusehenden Führungsschiene greift.

5. Schienengebundene Möbeleinheit gemäß einem der Ansprüche 2 bis 4, wobei der bewegliche Teil (13, 23) des ersten und des zweiten schienenläufigen Möbelfußes (10, 20) über eine Hebelanordnung (30, 31) gleichzeitig bewegbar und mit einer Andruckkraft beaufschlagbar ist.

6. Schienengebundene Möbeleinheit gemäß einem der Ansprüche 2 bis 5, wobei der bewegliche Teil (13, 23) mit einer Federanordnung (32) derart vorgespannt ist, dass die Auskragung (14, 24) in einer ersten, die Möbeleinheit an der Führungsschiene festlegenden Position gegenüber der Hinterschneidung (44) der vorzusehenden Führungsschiene (40) mit einer Kraft beaufschlagt ist, und in einer zweiten, die Möbeleinheit von der Führungsschiene freigebenden Position durch den Hebelanordnung (30, 31) eine der Kraft entgegengesetzte Gegenkraft auf den beweglichen Teil wirkt, die die Auskragung von der Hinterschneidung beabstandet hält.

7. Schienengebundene Möbeleinheit gemäß einem der Ansprüche 2 bis 6, wobei der wenigstens eine schienenläufige Möbelfuß (10, 20) eine Exzentervorrichtung (19, 29) aufweist, wobei der bewegliche Teil (13, 23) des wenigstens einen schienenläufigen Möbelfußes (10, 20) mittels der Exzentervorrichtung zwischen einer ersten, die Möbeleinheit an der Führungsschiene festlegenden Position, und einer zweiten, die Möbeleinheit von der Führungsschiene freigebenden Position bewegbar ist.

8. Schienengebundene Möbeleinheit gemäß einem der Ansprüche 2 bis 7, ferner mit einer der vorzusehenden Führungsschiene (40) zugewandten Anlagefläche (14a, 24a) und einer Gleit- bzw. Rollauflage (5), wobei die Gleit- bzw. Rollauflage in Richtung der vorzusehenden Führungsschiene federnd gelagert ist, wobei die federnd gelagerte Gleit- bzw. Rollauflage in einer zweiten, die Möbeleinheit von der Führungsschiene freigebenden Position die Anlagefläche (14a, 24a) von einer der Anlagefläche gegenüberliegenden Bootsfläche (60) beabstandet hält.

9. Schienengebundene Möbeleinheit gemäß einem der Ansprüche 7 und 8, wobei der wenigstens eine schienenläufige Möbelfuß (10, 20) einen zweiten beweglichen Teil (13a, 23a) aufweist, wobei der zweite bewegliche Teil eine der vorzusehenden Führungsschiene zugewandte Anlagefläche (14a, 24a) aufweist, wobei der bewegliche Teil (13, 23) gegenüber dem zweiten beweglichen Teil mittels der Exzentervorrichtung (19, 29) derart zwischen der ersten und der zweiten Position bewegbar ist, dass in der ersten Position die Auskragung (14, 24) gegenüber der Anlagefläche (14a, 24a) derart mit einer Kraft beaufschlagbar ist, dass der wenigstens eine schienengebundene Möbelfuß gegenüber der vorzusehenden Führungsschiene festlegbar ist, und in der zweiten Position der wenigstens eine schienengebundene Möbelfuß gegenüber der vorzusehenden Führungsschiene bewegbar ist.

10. Schienengebundene Möbeleinheit gemäß einem der Ansprüche 8 und 9, wobei die Exzentervorrichtung (19, 29) auf einer gegenüber der schienengebundenen Möbeleinheit drehbar gelagerten Achse (A) angeordnet ist und eine gegenüber der drehbar gelagerten Achse erste Exzenterscheibe (19a, 29a) mit einer ersten Exzenterrichtung und eine gegenüber der drehbar gelagerten Achse zweite Exzenterscheibe (19b, 29b) mit einer zweiten Exzenterrichtung aufweist, wobei der bewegliche Teil (13, 23) mit der ersten Exzenterscheibe und der zweite bewegliche Teil (13a, 23a) mit der zweiten Exzenterscheibe derart gekoppelt ist, dass bei einer Drehung der Exzentervorrichtung der bewegliche Teil gegenüber dem zweiten beweglichen Teil zwischen der ersten Position und der zweiten Position bewegbar ist.

11. Möbelmodul für ein Personentransportfahrzeug, wobei das Möbelmodul (4) aufweist:
eine schienengebundene Möbeleinheit (2) gemäß einem der Ansprüche 1 bis 10,
eine Führungsschiene (40) mit unterschiedlichen Krümmungsradien,
wobei der erste und zweite schienenläufige Möbelfuß (10, 20) jeweils eine Drehachse (11,21) aufweist, um die sich die Möbeleinheit bei einer Verschiebung entlang der Führungsschiene bezüglich der Führungsschiene derart drehen kann, dass die schienengebundene Möbeleinheit über die schienenläufigen Möbelfüße in der Führungsschiene mit verschiedenen Krümmungsradien verfahrbar ist.

12. Möbelmodul für ein Personentransportfahrzeug gemäß Anspruch 11, wobei die Führungsschiene (40) einen Laufschlitz (42) aufweist, in den eine Führungsvorrichtung (12, 22) des Möbelfußes (10, 20) über eine Unterseite (3) der Möbeleinheit (2) hinaus einragt, wobei die Führungsschiene eine seitlich des Laufschlitzes in von der Möbeleinheit abgewandten Richtung auskragende Wandung (43) aufweist, die als Lauffläche (45) für die Führungsvorrichtung des Möbelfußes geeignet ist.

13. Möbelmodul für ein Personentransportfahrzeug gemäß einem der Ansprüche 11 und 12, ferner mit einem Bodenbelag (60), der die Führungsschiene (40) abdeckt, wobei der Bodenbelag oberhalb des Laufschlitzes (42) eine Ausnehmung (62) in Form des Laufschlitzes aufweist, wobei der Bodenbelag den Laufschlitz in einem Maß überragt, welches geringer ist als die Wandstärke einer um eine Führungsvorrichtung (12, 22) des Möbelfußes (10, 20) drehbar angeordneten Laufbuchse (15, 25).

14. Wasserfahrzeug mit einem Möbelmodul gemäß einem der Ansprüche 11 bis 13, wobei das Wasserfahrzeug (1) eine tragfähige Oberfläche (50) aufweist, in die integral eine langgestreckte Absenkung (54) eingeformt ist, wobei die Absenkung in Form und Umfang ausgelegt ist, die Führungsschiene (40) derart aufzunehmen, dass die Führungsschiene unterhalb des Oberflächenniveaus der Oberfläche angeordnet ist.

15. Wasserfahrzeug gemäß Anspruch 14, wobei die langgestreckte Absenkung (54) im Querschnitt einen ersten Bereich (51) und einen zweiten Bereich (52) aufweist, wobei der zweite Bereich bezüglich der Oberfläche (50) tiefer abgesenkt ist als der erste Bereich, wobei wenigstens ein Teil der Führungsschiene (40) im ersten Bereich liegt und der Laufschlitz (42) im zweiten Bereich (52) liegt, wobei der zweite Bereich derart ausgestaltet ist, dass der zweite Bereich die Auskragung (14, 24) des ersten beweglichen Teils (13, 23) des Möbelfußes (10, 20) kann.

16. Wasserfalirzeug gemäß einem der Ansprüche 14 oder 15, ferner mit einer Antriebsfreigabevorrichtung (71), und einem Positionsensor (72) für Positionserkennung der Möbeleinheit (2), wobei die Antriebsfreigabevorrichtung ausgelegt ist einen vorzusehenden Antrieb (73) freizugeben, wenn sich die Möbeleinheit auf einer vom Positionssensor erfassten vorbestimmten Position befindet.
